# EUROPÄISCHE PATENTANMELDUNG

(11) **EP 1 857 791 A1**
(43) Veröffentlichungstag der Anmeldung: **21.11.2007**
(21) Anmeldenummer: 07106371.3
(22) Anmeldetag: 18.04.2007
(51) Int. Cl.: G01J 5/00, G01J 5/60, F24C 7/08

(54) **Temperaturerfassungseinrichtung**

(30) Priorität: 17.05.2006 DE 102006023190
(71) Anmelder: BSH Bosch und Siemens Hausgeräte GmbH, 81739 München (DE)
(72) Erfinder: Has, Uwe, 84579, Unterneukirchen (DE); Vetterl, Peter, 83355, Grabenstätt (DE); Schieferdecker, Jörg, 65388, Schlangenbad (DE); Schulze, Mischa, 65510, Hünstetten (DE)

(57) **Zusammenfassung**

Die vorliegende Erfindung bezieht sich auf eine Temperaturerfassungseinrichtung eines Geräts zur berührungslosen Erfassung der Temperatur und/oder der Temperaturänderung eines Gegenstandes (4) insbesondere eines Kochgeschirrs mit thermisch durch das Gerät zu beaufschlagenden und/oder zu behandelnden Gargut, unter Verwendung zumindest eines den Gegenstand zumindest partiell erfassenden Infrarotstrahlungssensors (6).

Der Temperaturerfassungseinrichtung ist ein in Richtung auf den temperaturmäßig zu erfassenden Gegenstand strahlender Infrarotstrahler (1) zugeordnet.

Die vom zugeordneten Infrarotstrahler ausgesandte Strahlung wird von dem zu erfassenden Gegenstand reflektiert und zur Feststellung der Beschaffenheit des zu erfassenden Gegenstandes durch den Infrarotsender ausgewertet.

## Beschreibung

Die vorliegende Erfindung bezieht sich auf eine Temperaturerfassungseinrichtung eines Geräts zur berührungslosen Erfassung der Temperatur und/oder der Temperaturänderung eines Gegenstandes, insbesondere eines Kochgeschirrs mit thermisch durch das Gerät zu beaufschlagendem und/oder zu behandelndem Gargut, unter Verwendung zumindest eines den Gegenstand zumindest partiell erfassenden Infrarotstrahlungssensors.

Um den Bedienungs- und insbesondere Steuerungskomfort im Bereich von Kochstellen zu erhöhen, ist es bekannt geworden, die Temperatur des thermisch beaufschlagten Garguts zu erfassen. Durch einen entsprechenden Regelmechanismus kann somit die gewünschte Gartemperatur und insbesondere die Siedetemperatur möglichst exakt eingehalten werden.

Es ist jedoch günstiger praktizierbar, nicht das thermisch zu beaufschlagende Gargut selbst temperaturmäßig zu erfassen; vielmehr bietet es sich an, auf die Temperatur des Gargutgefäßes repräsentativ zurückzugreifen. Handhabungstechnisch ist dabei vorteilhaft, die Temperaturerfassung berührungslos vorzunehmen und zwar unter Verwendung von Infrarotsensoren, welche die Wärmestrahlung der Wandung des Gargutgefäßes erfassen. Bekannte Temperatursensoren umfassen einen Infrarotsensor, der mittels eines Gleichlichtpyrometers die Temperatur der Außenwand des Kochgeschirrs in einem Wellenlängenbereich von ca. 6µm bis ca. 14µm erfasst. Das vom Infrarotsensor für die elektronische Regelung bereit gestellte elektrische Signal hängt unmittelbar vom thermischen Emissionsgrad des Erfassungsbereiches des Gargutgefäßes ab. Damit ein möglichst zuverlässig die eigentlich zu erfassende Temperatur des thermisch behandelten Garguts repräsentierendes Signal erzielt wird, muss der Emissionsgrad des wärmetechnisch erfassten Gargutbehälters auch möglichst exakt bekannt sein.

Im praktischen Einsatz werden Gargutgefäße aus unterschiedlichen Materialien und unterschiedlichen Oberflächenbeschaffenheiten zum Einsatz gebracht mit der Folge, dass auch die jeweiligen Emissionsgrade bei vergleichbaren Temperaturen des Garguts im Gargutgefäß erheblich voneinander abweichen. Die Emissionsgrade von Gargutbehältern aus Edelstahl und aus Keramik unterscheiden sich im starken Maße und auch unterschiedliche Emaillebeschichtungen sind unterschiedlich in ihrer Wirkung. Durch die Benutzung der Gargutbehälter können und werden die Oberflächenbeschaffenheiten ebenfalls auch im Hinblick auf den Strahlungsemissionsgrad verändert.

Ein Verfahren zur berührungslosen, vom Emissionsgrad des betrachteten Objekts unabhängigen Strahlungsmessung der Objekttemperatur ist aus der EP 01 143 282 A bekannt. Ein Verfahren zur Erfassung der Temperaturverteilung eines Gargutbehälters ist weiterhin aus der EP 1 302 759 A bekannt.

Weiterhin ist es bekannt geworden (10 2004 023 846.4), einen Sensor zur Erfassung einer Kochgeschirrtemperatur zur Verfügung zu stellen, welcher einen Infrarotsensor mit wenigstens zwei voneinander differierenden Empfindlichkeitsbereichen zur Erfassung wenigstens zweier unterschiedlicher vom Kochgeschirr ermittelter Wellenlängenbereiche aufweist. Durch den Vergleich zumindest zweier voneinander bzgl. des Wellenbereichs abweichender Werte, kann durch die Auswerteschaltung auf die wahrscheinliche Emissionsgradcharakteristik der Wandung des Gargutbehälters geschlossen werden.

Die Aufgabe der vorliegenden Erfindung besteht darin, eine berührungslos arbeitende Temperaturerfassungseinrichtung eines Geräts bereitzustellen, die dazu dient, den Emissionsgrad eines Gegenstandes, welcher thermisch beaufschlagt ist, zu bestimmen.

Eine Temperaturerfassungseinrichtung, die dieser Forderung gerecht wird, ist erfindungsgemäß dadurch gekennzeichnet, dass dieser Temperaturerfassungseinrichtung ein in Richtung auf den temperaturmäßig zu erfassenden Gegenstand strahlender Infrarotstrahler zugeordnet ist, dessen vom Gegenstand reflektierter Strahlungsanteil von einem Infrarotsensor erfasst und mit dem vom Infrarotstrahler ausgesandten Strahlungswert strahlungstechnisch in Relation gesetzt wird.

Diese Maßnahme basiert auf der Erkenntnis, dass der Summenwert aus Reflektionsgrad, Transmissionsgrad und Emissionsgrad einer Oberfläche stets konstant den Wert 1 ergibt. Da der Transmissionsgrad einer Wandung eines Gargutbehälters bei einer Infrarotbestrahlung praxisnah üblicher Weise mit dem Wert 0 angenommen und damit eliminiert werden kann, ist der Emissionsgrad einer Gargutbehälterwand aus einer Messung des Reflektionsgrades bestimmbar. Dieser Reflektionsgrad einer Oberfläche kann gemessen werden, in dem der Infrarotstrahler mit bekannten Eigenschaften auf die betrachtete Oberfläche Energie strahlt und der reflektierte Strahl dieser Strahlung durch den vorhandenen Infrarotsensor gemessen wird. Der Reflektionsgrad der Oberfläche ist proportional zu dem Verhältnis aus der reflektierten Energie zur eingestrahlten Energie.

Bevorzugter Weise wird der Infrarotstrahler und der Infrarotsensor dieser Temperaturerfassungseinrichtung bzgl. der optischen Strahlengänge auf einen gemeinsamen Stellenbereich des temperturmäßig zu erfassenden Gegenstandes fokussiert.

Um das Temperaturmessergebnis im Rahmen der vorliegenden erfindungsgemäßen Temperaturerfassungseinrichtung noch weiter zu optimieren, ist es zweckmäßig, eine Mehrzahl von Infrarotsensoren zum temperaturmäßigen Erfassen des Gegenstandes anzuordnen.

Aufbautechnisch und insbesondere funktionstechnisch ist es vorzuziehen, dass der Infrarotstrahler und der bzw. die Infrarotsensoren zu Bestandteilen einer gemeinsamen optischen Systemeinheit zusammengefasst sind, wobei bevorzugt die optische Systemeinheit gebildet ist unter Verwendung eines optischen Hohlspiegels mit um dessen Brennpunktbereich eng angeordneten Infrarotsender und Infrarotsensor. Es bietet sich an, als Infrarotsender und/oder Infrarotsensor Thermopile-Elemente (Thin Film Radiator = TFR) anzuordnen.

Im Rahmen der Erfindung bietet es sich auch an, ein oder mehrere Thermopile-Elemente alternierend als Infrarotsensor und Infrarotsender elektronisch schaltungstechnisch zu beaufschlagen. Dies bedeutet, dass der bzw. einer der entsprechend konfigurierten Infrarotsensoren bzgl. ihrer Sensoreneigenschaften abgeschaltet und kurzzeitig als Infrarotsender geschaltet wird. Die Umschaltzeit von der einen zur anderen Funktion liegt innerhalb der Laufzeit der Strahlung.

Für die Infrarotmessung sind - um Störeinflüsse möglichst auszuschalten - Infrarotsender und den Infrarotsensor bzw. die Infrarotsensoren für einen Wellenbereich zwischen 4µm bis 20µm ausgelegt und um die Messgenauigkeit noch weiter zu verbessern, sind innerhalb dieses Wellenbereichs zumindest ein weiterer Wellenkanal in bekannter Weise genutzt.

Durch Einsatz von spektralen Filtern mit unterschiedlichen Durchlassbereichen vor den einzelnen Infrarotempfängern wird der Reflektionsgrad getrennt in definierten Wellenlängenbereichen bestimmbar.

Nach den Merkmalen der Erfindung gestaltete Ausführungsbeispiele sind anhand der Zeichnung im Folgenden kurz erläutert. Es zeigen:
- Fig. 1: schematisiert den Infrarotstrahlengang von Sender zum Empfänger und
- Fig. 2 und 3: schematisiert eine Sender-Empfänger-Konfiguration.

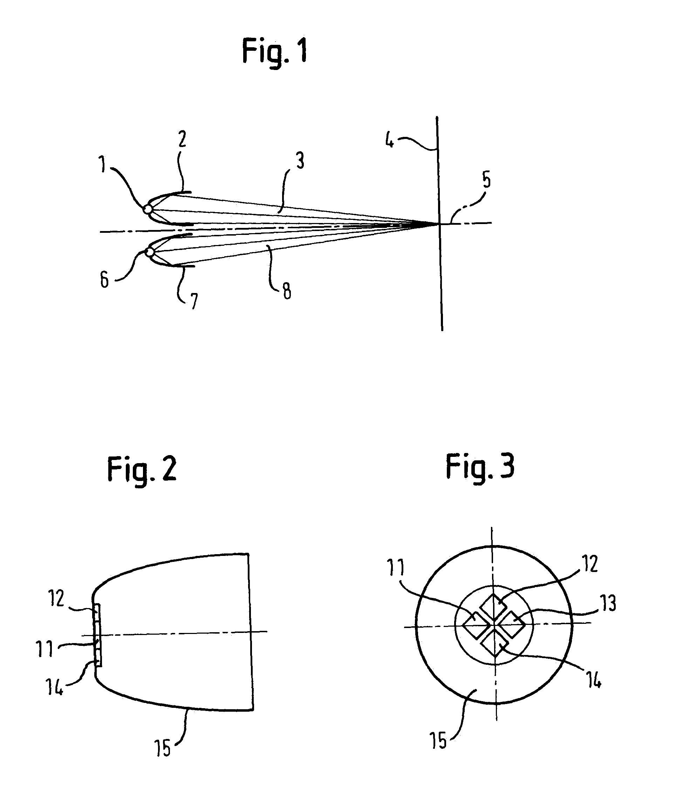

Gemäß Fig. 1 ist ein Infrarotsender 1 innerhalb eines Hohlspiegels 2 angeordnet (als Infrarotsender kann prinzipiell jedes Strahlungsabgebende Bauteil dienen). Über den Hohlspiegel 1 wird die abgegebene Infrarotstrahlung in Form des dargestellten Strahlengangs 3 auf die Außenwandung 4 eines thermisch zu erfassenden Gargutbehälters ausgerichtet und von dieser Wandung 4 zum Teil absorbiert und zum anderen Teil reflektiert und zwar abgelenkt um die optische Achse 5 in Richtung auf einen Infrarotsensor 6 innerhalb eines Hohlspiegels 7, welcher die reflektierte Strahlung innerhalb des Strahlungsganges 8 erfasst. Der bekannte Wert der vom Infrarotstrahler 1 ausgehenden Strahlung wird schaltungstechnisch mit den vom Sensors 6 empfangenen Wert der Strahlung in Beziehung gesetzt und daraus der Reflektionsgrad und der Emissionsgrad der erfassten Wandung 4 des Gargutbehälters ermittelt; damit kann schaltungstechnisch rückgeschlossen werden auf die Beschaffenheit der Wandung des Gargutbehälters insbesondere im Hinblick auf dessen strahlungstechnischen Eigenschaften. Diese somit ermittelten und ausgewerteten strahlungsspezifischen Eigenschaften der Gargutbehälterwandung 4 werden herangezogen bei der folgenden eigentlichen Temperaturbestimmung des Gargutträgers durch beispielsweise den Sensor 6 oder einen weiteren oder mehrere Sensoren. Damit lassen sich die erforderlichen Rückschlüsse auf die Temperatur des Garguts innerhalb des Gargutbehälters, schaltungstechnisch ziehen und die thermische Beaufschlagung des Garguts durch eine dafür angeordnete Heizquelle sehr exakt bestimmen und steuern.

Infrarotstrahler und Infrarotempfänger sollen möglichst dicht beieinander sein, damit sie stets auf denselben Fleck auf der betrachteten Oberfläche optisch ausgerichtet sind. Dies kann durch die durch die Figuren 2 und 3 schematisiert dargestellte Anordnung geschehen. Die Anordnung beinhaltet einen Infrarotstrahler 11 und drei Infrarotsensoren 12, 13, 14, die nahe des Brennpunktes und um die optischen Achsen eines Hohlspiegels 15 (Winsten-Cone) platziert angeordnet sind. Dabei sind der Infrarotstrahler 11 und die Infrarotsensoren 12 ähnlich von Thermopilen aufgebaut und als solche auf einer hohlen Platte des Hohlspiegels 13 gebondet. Damit ist gewährleistet, dass eine absolute Identität des Messfleckes für die Temperaturmessung mit dem Messfleck für die Bestimmung des Reflektionsfaktors gegeben ist. Außerdem ist das gesamte System bzgl. seines praktischen Aufbaus minimierbar.

## Patentansprüche

1. Temperaturerfassungseinrichtung eines Geräts zur berührungslosen Erfassung der Temperatur und/oder Temperaturänderung eines Gegenstandes, insbesondere eines Kochgeschirrs mit thermisch durch das Gerät zu beaufschlagendem und/oder zu behandelndem Gargut unter Verwendung zumindest eines den Gegenstand zumindest parziell erfassenden Infrarotstrahlungssensors, **dadurch gekennzeichnet, dass** der Temperaturerfassungseinrichtung ein in Richtung auf den temperaturmäßig zu erfassenden Gegenstand strahlender Infrarotstrahler (1) zugeordnet ist, dessen vom Gegenstand reflektierender Strahlungsanteil von einem Infrarotsensor (6) erfasst und mit dem vom Infrarotstrahler (1) ausgesandten Strahlungswert schaltungstechnisch in Relation gesetzt wird.

2. Temperaturerfassungseinrichtung nach Anspruch 1, **dadurch gekennzeichnet, dass** der Infrarotstrahler(1) und der Infrarotsensor (6) diese Temperaturerfassungseinrichtung (6) bzgl. der optischen Strahlengänge (3, 8) auf einen gemeinsamen Stellenbereich des temperaturmäßig zu erfassenden Gegenstandes (4) fokussiert sind.

3. Temperaturerfassungseinrichtung nach einem der Ansprüche 1 oder 2, **dadurch gekennzeichnet, dass** eine Mehrzahl von Infrarotsensoren (12, 13, 14) zum temperaturmäßigen Erfassen des Gegenstandes angeordnet sind.

4. Temperaturerfassungseinrichtung nach einem der Ansprüche 1 bis 3, **dadurch gekennzeichnet, dass** der Infrarotstrahler (11) und der bzw. die Infrarotsensoren (12, 13, 14) zu Bestandteilen einer gemeinsamen optischen Systemeinheit zusammengefasst sind.

5. Temperaturerfassungseinrichtung nach Anspruch 4, **dadurch gekennzeichnet, dass** die optische Systemeinheit gebildet ist unter Verwendung eines optischen Hohlspiegels (15) mit um dessen Brennpunktbereich eng angeordneten Infrarotsender (11) und Infrarotsensoren.

6. Temperaturerfassungseinrichtung nach einem der Ansprüche 1 bis 5, **dadurch gekennzeichnet, dass** als Infrarotsender (1, 11) und/oder Infrarotsensoren (6, 12, 13, 14) Thermopile-Elemente (Thin Film Radiator = TFR) angeordnet sind.

7. Temperaturerfassungseinrichtung nach Anspruch 6, **dadurch gekennzeichnet, dass** ein oder mehrere Thermopile-Elemente alternierend als Infrarotsender und Infrarotsensor elektronisch schaltungstechnisch beaufschlagt sind.

8. Temperaturerfassungseinrichtung nach einem der Ansprüche 1 bis 7, **dadurch gekennzeichnet, dass** der Infrarotsender gepulst und/oder moduliert ansteuerbar ist.

9. Temperaturerfassungseinrichtung nach einem der Ansprüche 1 bis 8, **dadurch gekennzeichnet, dass** dem Infrarotsender und/oder den Infrarotsensoren optisch spektrale Filter zugeordnet sind.

10. Temperaturerfassungseinrichtung nach einem der Ansprüche 1 bis 9, **dadurch gekennzeichnet, dass** für die Infrarotmischung der Infrarotsender und der bzw. die Infrarotsensoren für einen Wellenbereich zwischen 4 µm bis 20 µm ausgelegt bzw. geschaltet sind.

11. Temperaturerfassungseinrichtung nach Anspruch 10, **dadurch gekennzeichnet, dass** für die Infrarotmessung der Infrarotsender und der bzw. die Infrarotsensoren für zumindest einen weiteren Wellenbereich zwischen 4 µm bis 20 µm ausgelegt bzw. geschaltet sind.
